# EUROPEAN PATENT SPECIFICATION

(11) **EP 2 487 812 B1**
(45) Date of publication and mention of the grant of the patent: **04.06.2014**
(21) Application number: 10837012.3
(22) Date of filing: 01.12.2010
(51) Int. Cl.: H04Q 11/00, H04J 3/06

(54) **REGISTRATION WINDOW ADJUSTMENT METHOD, SYSTEM AND DEVICE FOR PASSIVE OPTICAL NETWORK (PON)**
VERFAHREN, SYSTEM UND VORRICHTUNG ZUR EINSTELLUNG EINES REGISTRIERUNGSFENSTERS FÜR EIN PASSIVES OPTISCHES NETZWERK
PROCÉDÉ, SYSTÈME ET DISPOSITIF D'AJUSTEMENT D'UNE FENÊTRE D'ENREGISTREMENT POUR UN RÉSEAU OPTIQUE PASSIF (PON)

(30) Priority: 18.12.2009 CN 200910261626
(43) Date of publication of application: 15.08.2012
(73) Proprietor: Huawei Technologies Co., Ltd., Shenzhen, Guangdong 518129 (CN)
(72) Inventor: ZENG, Xiaofei, Shenzhen Guangdong 518129 (CN); DONG, Yinghua, Shenzhen Guangdong 518129 (CN)
(74) Representative: Thun, Clemens
(86) International application number: PCT/CN2010/079360
(87) International publication number: WO 2011/072575

(56) References cited:
- EP-A1- 2 043 286
- CN-A- 1 244 751
- CN-A- 101 083 589
- CN-A- 101 399 616
- "Gigabit-capable Passive Optical Networks (G-PON): Transmission convergence layer specification; G.984.3 (03/08)", ITU-T STANDARD, INTERNATIONAL TELECOMMUNICATION UNION, GENEVA ; CH, no. G.984.3 (03/08), 29 March 2008 (2008-03-29), XP017433831,

## Description

### FIELD OF THE INVENTION

The present invention relates to the field of communication technologies, and in particular to a method, a system, and an apparatus for adjusting a registration window in a passive optical network.

### BACKGROUND OF THE INVENTION

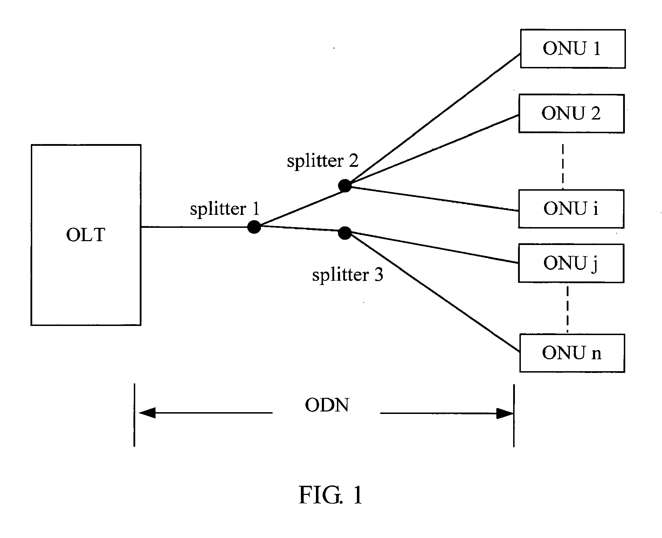

A time division multiplexing passive optical network (TDM PON) system includes a central office device and remote devices. As shown in FIG. 1, the central office device is an optical line terminal (OLT). The remote devices include units such as optical network units (ONU) and an optical distribution network (ODN). The ODN mainly includes components such as optical fibers and splitters.

FIG. 1 shows a network topology of the ODN having two levels of splitters. An OLT may include a plurality of ONUs. Some ONUs are located under a level-1 splitter, and some ONUs are located under level-2 splitters. Physical distances between respective ONUs and the OLT are not necessarily equal. A difference between a maximum physical distance and a minimum physical distance is a maximum distance difference.

Before communicating with the OLT normally, each ONU needs to be registered at the OLT. A registration process is: The OLT periodically creates a registration window at regular intervals. In the window, ONUs that have been registered at the OLT do not transmit upstream data, while each unregistered ONU transmits registration information to the OLT after a certain delay (including a pre-equalization delay delivered by the OLT to each ONU in advance, plus a random delay, and an ONU fixed processing delay) upon receiving a registration message, so as to avoid collisions caused by the registration information of the ONUs. A registration window size, and time lengths of the pre-equalization delay of each ONU, the random delay, and the ONU fixed processing delay are preset before the registration.

The longer the information transmission distance, the higher the optical power attenuation, and the more serious the dispersion. Therefore, existing PON technical standards specify the maximum physical distance and the maximum differential physical distance of a PON system. For example, the Gigabit-capable passive optical network (GPON) standard specifies that the maximum physical distance of the system is 20 km and the maximum differential physical distance is 20 km. With the development of PON technologies, a coverage area of the PON network becomes wider and wider, and the transmission distance becomes longer and longer. Under this development trend, actual values of the maximum physical distance and the maximum differential physical distance of the PON system may exceed the specified values in the existing standards. This causes the PON system to be unable to work normally. At present, no solution is provided in the existing techniques to solve this problem.

EP 2043286 A1 discloses a method to equalize message delays in a passive optical network between an optical line terminator and optical network units, connected at different distances to the optical line terminal, where a predefined delay for messages from the optical network unit (ONU) in response to messages from the optical line terminator (OLT) is changed in a particular optical network unit by a message in an initialization process for new connected optical network units (ONU).

Standard ITU-T G.984.3 (03/08) has just discloses an activation procedure allowing an inactive ONU to join or resume operations on the PON.

None of EP 2043286 A1 and Standard ITU-T G.984.3 (03/08) has disclosed all the features recited in the claims.

### SUMMARY OF THE INVENTION

Embodiments of the present invention provide a method, a system, and an apparatus for adjusting a registration window in a passive optical network, so that optical network units in various physical distances in the passive optical network can be registered at an optical line terminal.

To solve the foregoing technical problems, the embodiments of the present invention provide the following technical solutions:

A method for registering optical network units in passive optical networkat an optical terminal includes: sending pre-equalization delay values to optical network units to be registered, wherein the pre-equalization delay values are adaptive to a preset registration window; receiving information fed back by the optical network units to be registered according to the pre-equalization delay values; performing ranging on the optical network units to be registered according to the information; adjusting the pre-equalization dela y values according to ranging results and sending adjusted pre-equalization delays to the optical network units to be registered; receiving registration information sent by the optical network units to be registered according to the adjusted pre-equalization delay values, and interacting with the optical network units to be registered to perform registration on the optical network units to be registered.

An optical line terminal includes: a transceiver unit, configured to send pre-equalization delay values t to optical network units to be registered, and receive information fed back by the optical network units to be registered according to the pre-equalization delay values, wherein the pre-equalization delay values are adaptive to a preset initial registration window; a measurement unit, configured to perform ranging on the optical network units to be registered according to the information fed back by the optical network units to be registered; an adjusting unit, configured to adjust both the initial registration window and the pre-equalization delay values according to the ranging results of the measurement unit; moreover, the transceiver unit is further configured to send pre-equalization delay values adjusted by the adjusting unit to the optical network units to be registered, receive registration information sent by the optical network units to be registered according to the adjusted pre-equalization delay values, and interact with the optical network units to be registered to perform registration on the optical network units to be registered.

A passive optical network system includes an optical line terminal and a plurality of optical network units to be registered. The optical line terminal and the optical network units to be registered are connected in a point-to-multipoint mode through an optical distribution network. The optical line terminal is configured to send pre-equalization delay values that are adaptive to a preset initial registration window to the optical network units to be registered; receive information fed back by the optical network units to be registered according to the pre-equalization delay values; perform ranging on the optical network units to be registered, by using the information by using the information; adjust the pre-equalization delay values according to ranging results and send adjusted pre-equalization delay values to the optical network units to be registered, or adjust both the initial registration window and the pre-equalization delay values according to ranging results and send adjusted pre-equalization delay values to the optical network units to be registered. The optical network units to be registered are configured to receive the pre-equalization delay values provided by the optical line terminal; feed back corresponding response information to the optical line terminal according to the pre-equalization delay values.

Compared with the existing techiniques, in the solutions provided by the embodiments of the present invention, dynamic ranging is performed on the optical network units to be registered, and the pre-equalization delays of the optical network units to be registered are timely and actively adjusted according to different physical distances, or both the registration window and the pre-equalization delays of the optical network units to be registered are adjusted, so that an optical network unit whose actual maximum physical distance value and/or actual differential maximum physical distance value exceeds a specified value in standards in the passive optical network system can also be registered at the OLT, and thereby implementing normal communication.

### BRIEF DESCRIPTION OF THE DRAWINGS

To make the technical solutions according to the embodiments of the present invention or in the prior art clearer, accompanying drawings required for describing the embodiments are briefly introduced in the following. Apparently, the accompanying drawings in the following description are merely some embodiments of the present invention, and persons of ordinary skill in the art may further obtain other drawings from these accompanying drawings without creative efforts.
FIG. 1 is a structural topology diagram of a passive optical network system;
FIG. 2 is a schematic flowchart of a method for adjusting a registration window in a passive optical network according to an embodiment of the present invention;
FIG. 3 is a schematic diagram of a registration window configuration of a method for adjusting a registration window in a passive optical network according to another embodiment of the present invention;
FIG. 4 is a schematic structural diagram of an optical line terminal according to another embodiment of the present invention.

### DETAILED DESCRIPTION OF THE EMBODIMENTS

The technical solutions according to the embodiments of the present invention are clearly and completely described with reference to the accompanying drawings in the embodiments of the present invention. Evidently, the embodiments to be described are merely part of rather than all of the embodiments of the present invention. All other embodiments obtained by those of ordinary skill in the art according to the embodiments of the present invention without creative efforts shall fall within the protection scope of the present invention.

Generally, in a passive optical network (PON) system, a size of a registration window, which is provided by an optical line terminal and used for registration of optical network units, is related to a maximum differential physical distance of the optical network units to be registered. Assume that a time instance that registration information of the optical line terminal reaches a nearest optical network unit to be registered is tmin1, a time instance that the registration information of the optical line terminal reaches a furthest optical network unit to be registered is tmax1, and time instances that information of the nearest optical network unit and the furthest optical network unit reported to the optical line terminal reach the optical line terminal are tmin2 and tmax2 respectively, then the size of the registration window may be tmax2-tmin1.

For example, the optical line terminal may open a registration window with a size of 250 µs at regular intervals (such as 5s). A random delay for each optical network unit to be registered is 0-48 µs. A fixed delay time error of each optical network unit is 2 µs. In this way, a unidirectional transmission time difference from the optical network unit to be registered to the optical line terminal is (250-48-2)/2 = 100 µs. Taking into account that a transmission speed of an optical signal in an optical fiber is approximately the propagation velocity of light in vacuum C divided by the refractive index of the optical fiber n, that is, C/n = (3.0 x 10⁸)/1.5 = 2 x 10⁸ m/s. In this way, the registration window with the size of 250 µs may correspond to the case in which the transmission time difference is 100 µs and the maximum differential physical distance is 20 km.

According to the embodiments of the present invention, physical distances from the optical network units to the optical line terminal are measured in real time, the preset size of the registration window and/or the preset pre-equalization delay of each optical network unit (the transmission time difference can be adjusted indirectly by adjusting the pre-equalization delays) are adjusted according to different physical distances, so that an optical network unit whose maximum physical distance exceeds 20 km and maximum differential physical distance exceeds 20 km can also be registered at the optical line termnal, and thereby implementing normal communication. Specific embodiments are described as follows.

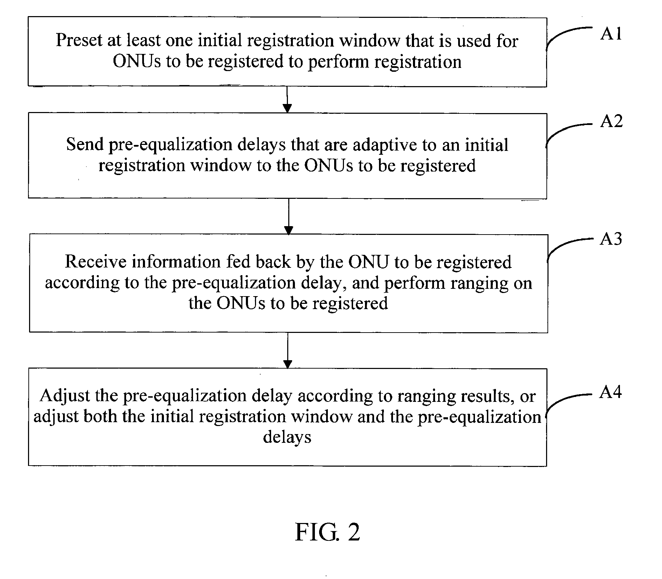

FIG. 2 is a schematic flowchart of a method for adjusting a registration window of a passive optical network according to an embodiment of the present invention. The method may for example be implemented in an optical line terminal communicating with a plurality of optical network units.

### Embodiment 1

Step A1 : Preconfigure at least one initial registration window that is used for ONUs to be registered to perfrom registration.

Step A2: Send pre-equalization delays that are adaptive to the initial registration window to the ONUs to be registered.

Step A3: Receive response information fed back by the ONUs to be registered according to the pre-equalization delays sent in step A2, and perform ranging on the ONUs to be registered respectively.

The response information may be serial numbers of the ONUs to be registered.

Further, in an embodiment, a ranging process performed in step A3 on each of the ONUs to be registered may include:
Record a total time length T of a time period from a time instance that a pre-equalization delay adaptive to the initial registration window is sent to a time instance that the information fed back by the ONU to be registered is received;
Subtract the pre-equalization delay Dp sent in step A2, a fixed delay of the ONU to be registered Df, and a maximum random delay Dm from the total time length T, to obtain a remaining time value t;
Multiply the remaining time value t and the transmission speed C of light in the optical fiber;

Take a half of the product of the remaining time value t and the transmission speed C of light in the optical fiber as a distance d from the ONU to be registered to an optical line terminal.

That is, the distance d from the ONU to be registered to the OLT is expressed as: d = C × t/2, where t = T - (Dp+Df +Dm).

Moreover, the ranging on other ONUs to be registered in step A3 can be performed with reference to the preceding solution.

Step A4: Re-adjust the pre-equalization delays according to ranging results, and resend the adjusted pre-equalization delays to the ONUs to be registered; or, re-adjust both the registration window of the OLT and the pre-equalization delays according to ranging results, and resend the adjusted pre-equalization delays to the ONUs to be registered.

Further, after step A4 is complete, in a specific embodiment, the method may also include the following steps:
Receive registration information sent by the optical network units to be registered according to the adjusted pre-equalization delays, and interact with the optical network units to be registered to perform registration on the optical network units to be registered.

Further, in an embodiment, step A4 may include:
If a maximum difference of physical distances from the ONUs to be registered to the OLT is less than a preset maximum physical distance difference corresponding to the initial registration window, and at least one of the physical distances from the ONUs to be registered to the OLT is greater than a preset maximum physical distance allowed by the initial registration window, re-adjust the pre-equalization delays in step A2 and resend adjusted pre-equalization delays to the ONUs to be registered;
If at least one difference of physical distances from the ONU to be registered to the OLT is greater than the preset maximum differential physical distance corresponding to the initial registration window, and at least one of the physical distances from the ONUs to be registered to the OLT is greater than the preset maximum physical distance allowed by the registration window, re-adjust a size of the registration window preset in step A1 and the pre-equalization delays in step A2, and resend adjusted pre-equalization delays to the ONUs to be registered.

In addition, the initial registration window preset in step A1 may be as follows:
1. A size of the initial registration window is preset to be sufficiently great to meet registration requirement of a furthest optical network unit from the optical line terminal; that is, set a relatively great window according to experience and actual requirements, and then slightly adjust the size of the window in the subsequent adjustment step A4, so that the registration window can support all of the ONUs to be registered without wasting system resources;
2. Multiple initial registration windows that respectively correspond to different specific physical distance segments are preset. For example, three initial registration windows respectively corresponding to specific physical distance segments of 0-20 km, 20-40 km, and 40-60 km are preset. The three initial registration windows are respectively provided for registration of the ONUs to be registered within the foregoing three specific physical distance segments, so as to enable the ONUs to be registered in difference distances to be registered in different windows.

Specifically, when the method according to the embodiment of the present invention is applicable to a GPON system, various adjustment modes may be flexibly adopted in step A4 according to the ranging results:
1. When physical distances of all ONUs to be registered are within 0-20 km, adjust the size of the registration window of the OLT and the pre-equalization delays of the ONUs to be registered to default configurations specified in standards. The pre-equalization delays ensure that upstream registration information of the ONUs to be registered can reach the OLT in the specified registration window. The OLT issues a command to each ONU to be registered in advance to enable each ONU to be registered to send the registration information after a certain delay (including the pre-equalization delay, plus a random delay, and a fixed processing delay of the ONU) upon receiving a registration messages.
2. When physical distances of some ONUs to be registered exceed 20 km, the adjustment modes are further divided into two cases:
   I. A maximum differential physical distance does not exceed 20 km.
      In this case, adjust the pre-equalization delays of the ONUs to be registered according to the maximum distance dmax and the minimum distance dmin in the system that are obtained in the foregoing ranging step.
   II. A maximum differential physical distance exceeds 20 km.

   Keep the size of the registration window unchanged, and adjust the pre-equalization delays of the ONUs to be registered, so that the ONUs to be registered at different physical distances can be registered at the OLT; or,
   when a relatively great registration window is preset, adjust both the size of the registration window and the pre-equalization delays of the ONUs to be registered; or,
   arrange the ONUs to be registered into multiple groups of ONUs to be registered according to the physical distances of the ONUs to be registered, and adjust each group of ONUs to be registered to have a same pre-equalization delay or different pre-equalization delays.

According to the embodiment of the present invention, the physical distances between the OLT and the ONUs to be registered are dynamically measured in real time, and the pre-equalization delays of the ONUs to be registered are timely and actively adjusted according to different physical distances of the ONUs to be registered, or the registration window of the OLT and the pre-equalization delays of the ONUs to be registered are adjusted, so that an ONU whose actual maximum physical distance value and/or actual maximum differential physical distance value exceeds a specified value in standards in the PON system can also be registered at the OLT, and thereby implementing normal communication.

### Embodiment 2

Step S 11: Preset an initial configuration of an OLT.

In the embodiment, the setting the initial configuration of the OLT may include setting an initial registration window that can meet registration requirements of a furthest optical network unit from the optical line terminal. A size of the initial registration window may be set according to experience and actual requirements.

Step S12: The OLT creates a registration window according to the initial configuration, and sends pre-equalization delays that are adaptive to the initial registration window to the ONUs to be registered.

Step S13: The OLT performs ranging on the ONUs to be registered.

In the embodiment, ranging results of the ONUs to be registered includes that physical distances of some ONUs to be registered exceed 20 km, and a maximum differential physical distance of the ONUs to be registered also exceeds 20 km.

For example, a physical distance of a nearest ONU to the optical line terminal is 0 km, and a physical distance of a furthest ONU from the optical line terminal is 60 km. Accordingly, a maximum differential physical distance is 60 km.

Step S14: The OLT adjusts the pre-equalization delays of the ONUs to be registered, and modifies the initial configuration of the OLT.

Before adjusting the pre-equalization delays, the ONUs to be registered may be arranged into multiple groups according to the physical distances of the ONUs to be registered, for example, be arranged into three groups respectively corresponding to the physical distances of 0-20 km, 20-40 km, and 40-60 km. The grouping of the ONUs to be registered narrows an adjustment scope and facilitates a rapid adjustment.

The adjusted pre-equalization delays may be saved as an operation configuration. The operation configuration of each group may be the same as or different from the initial configuration. For example, an adjustment solution for the ONUs to be registered with physical distances of 0-20 km may adopt a default initial configuration of the system, and an adjustment solution for the ONUs to be registered with physical distances of 20-40 km may adopt the adjusted work configuration.

Parameter adjustment of the groups of ONUs to be registered can be implemented simultaneously or in a certain sequence. When the parameter adjustment is performed in sequence, after the adjustment of a group of ONUs to be registered is complete, an adjustment of a next group of ONUs to be registered continues. Therefore, step S14 may be executed repeatedly.

In addition, the adjustment solutions for the ONUs to be registered may be preset and saved according to the grouping of the ONUs to be registered. During the adjustment of the ONUs to be registered, the solutions for the ONUs to be registered are read directly to accelerate the adjustment. For example, the adjustment solution for the ONUs to be registered with physical distances of 20-40 km is saved as solution 20. After the ONUs to be registered are grouped, adjustment parameters recorded in the solution 20 is loaded for the ONUs to be registered with physical distances of 20-40 km group directly.

Step S 15: The ONUs to be registered send registration messages to the OLT.

The adjustment and registration may be separately implemented for each group of ONU to be registered. That is, after the adjustment of a group is complete, the ONUs to be registered belonging to the group starts to be registered at the OLT. Alternatively, after the adjustments of all groups are complete, all ONUs to be registered start to be registered at the OLT simultaneously. In the case of separate registration, step 203 and step 204 are executed repeatedly until all of the ONUs to be registered complete the registration. In the case of simultaneous registration, step 203 and step 204 are executed once.

According to the embodiment of the present invention, during the registration process, when the physical distances of the ONUs to be registered exceed 20 km, and the maximum differential physical distance exceeds 20 km, the preset pre-equalization delays are adjusted actively, and the initial configuration is modified, so that all ONUs to be registered may be registered at the OLT, thus ensuring normal long-distance communication of the network.

### Embodiment 3

Step S21: Preset an initial configuration of an OLT.

In the embodiment, the setting the initial configuration of the OLT may include setting multiple registration windows that respectively correspond to different specific physical distance segments, for example, the specific physical distance segments may respectively be 0-20 km, 20-40 km, and 40-60 km.

Step S22: The OLT creates the registration windows according to the initial configuration, and sends pre-equalization delays that are adaptive to the initial registration windows respectively to the ONUs to be registered.

Step S23: The OLT performs ranging on the ONUs to be registered, where ranging results includes that physical distances of some ONUs to be registered exceed 20 km, and a maximum differential physical distance of the ONUs to be registered also exceeds 20 km.

For example, a physical distance of a nearest ONU to the optical line terminal is 0 km, and a physical distance of a furthest ONU from the optical line terminal is 60 km. Accordingly, a maximum differential physical distance is 60 km.

Step S24: The OLT adjusts the registration windows and the pre-equalization delays of the ONUs to be registered, and modifies the initial configuration.

In the embodiment, before adjusting the registration windows, the ONUs to be registered may be arranged into multiple groups according to the physical distances of the ONUs to be registered, for example, be arranged into three groups respectively corresponding to the physical distances of 0-20 km, 20-40 km, and 40-60 km. The grouping of the ONUs to be registered narrows an adjustment scope and facilitates a rapid adjustment.

Parameter adjustment of the groups of the ONUs to be registered may be implemented simultaneously or in a certain sequence. When the parameter adjustment is performed in sequence, after the adjustment of a group of ONUs to be registered is complete, an adjustment of a next group of ONUs to be registered continues. Therefore, step S24 may be executed repeatedly.

Similar to step S14, adjustment solutions for the ONUs to be registered may be preset and saved according to the grouping of the ONUs to be registered. During the adjustment of the ONUs to be registered, the solutions for the ONUs to be registered are read directly to accelerate the adjustment.

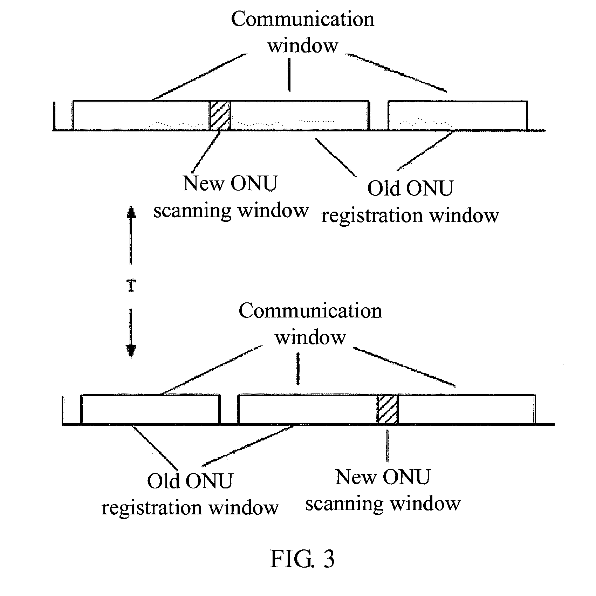

In addition, in the embodiment, the adjusted parameters may be saved as an operation configuration. At this time, the work configuration includes two parts, as shown in FIG. 3. One part is an existing registration window in an original initial configuration (the registration window is mainly used by ONUs that have been ranged, physical locations of the ONUs are not changed, but need to be re-registered at the OLT due to reasons such as power-on or power-off). The other part is a relatively great registration window that does not exist in the original initial configuration. The relatively great registration windows have longer periods, may increase an upstream bandwidth, and are mainly used for solving the problem that newly-accessing and long-distance ONUs to be registered cannot complete registration.

Step S25: The ONUs to be registered send registration messages to the OLT.

According to the embodiment of the present invention, during the registration process, when the physical distances of the ONUs to be registered exceed 20 km, and the maximum differential physical distance exceeds 20 km, the preset registration windows and pre-equalization delays are adjusted actively, and the initial configuration is modified, so that all ONUs to be registered may be registered at the OLT, thus ensuring normal long-distance communication of the network.

Besides the method for adjusting a registration window in a passive optical network, an embodiment of the present invention further provides an apparatus for adjusting a registration window in a passive optical network. The apparatus may be an optical line terminal. For a specific solution, reference may be made to a fourth embodiment in the following.

### Embodiment 4

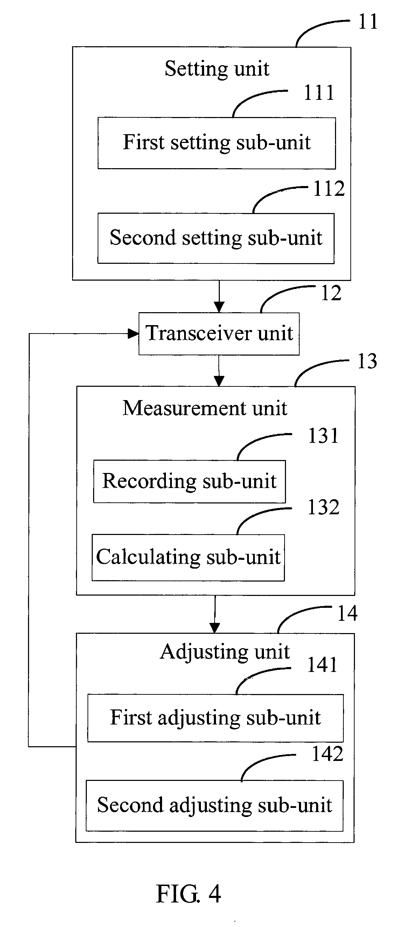

The fourth embodiment of the present invention provides an optical line terminal, which may be applicable to a passive optical network system, and implement an adjustment of a registration window for ONUs in the passive optical network system. Specifically, as shown in FIG. 4, the optical line terminal may include:
a transceiver unit 12, configured to send pre-equalization delays that are adaptive to a preset initial registration window to optical network units to be registered, and receive information fed back by the optical network units to be registered according to the pre-equalization delays.
a measurement unit 12, configured to perform ranging on the optical network units to be registered according to the information fed back by the optical network units to be registered.
an adjusting unit 14, configured to adjust the pre-equalization delays according to ranging results of the measurement unit 13, or adjust both the initial registration window and the pre-equalization delays according to ranging results of the measurement unit 13.

Moreover, the transceiver unit 12 may be further configured to send the pre-equalization delays adjusted by the adjusting unit 14 to the optical network units to be registered.

Further, in an embodiment, the optical line terminal may further include:
a setting unit 11, configured to preset at least one initial registration window for the optical network units to be registered to perform registration.

Referring to FIG. 4, in a specific embodiment, the setting unit 11 may include a first setting sub-unit 111 and/or a second setting sub-unit 112.

The first setting sub-unit 111 may be configured to preset an initial registration window that is used for the optical network units to be registered to perform registration, where the size of the initial registration window meets registration requirements of a nearest optical network unit to be registered from the optical line terminal.

The second setting sub-unit 112 may be configured to preset multiple initial registration windows that are used for the optical network units to be registered to perform registration, where the sizes of the initial registration windows respectively correspond to different physical distance segments from the optical network units to be registered to the optical line terminal.

Further, in a specific embodiment, the measurement unit 13 may include:
a recording sub-unit 131, configured to record a total time length of a time period from a time instance that the pre-equalization delays adaptive to the initial registration window is sent to a time instance that the information fed back by the optical network units to be registered is received.

A calculating sub-unit 132 is configured to subtract the pre-equalization delay of an optical network unit to be registered, a fixed delay of the optical network unit to be registered, and a maximum random delay from the total time length recorded by the recording sub-unit 131 to obtain a remaining time value; multiply the remaining time value and the transmission speed of light in the optical fiber; take a half of the product of the remaining time value and the transmission speed of light in the optical fiber as a distance from the optical network unit to be registered to the optical line terminal.

Further, in a specific embodiment, the adjusting unit 14 may include a first adjusting sub-unit 141 and/or a second adjusting sub-unit 142.

The first adjusting sub-unit 141 is configured to adjust the pre-equalization delays when a maximum difference of physical distances from the optical network units to be registered to the optical line terminal is less than a maximum differential physical distance corresponding to the initial registration window, and at least one of the physical distances from the optical network units to be registered to the optical line terminal is greater than a maximum physical distance allowed by the initial registration window;
the second adjusting sub-unit 142 is configured to adjust both the initial registration window set by the setting unit 11 and the pre-equalization delays when a maximum difference of the physical distances from the optical network units to be registered to the optical line terminal is greater than a maximum differential physical distance corresponding to the initial registration window, and at least one of the physical distances from the optical network unist to be registered to the optical line terminal is greater than the maximum physical distance allowed by the initial registration window.

The optical line terminal provided in the embodiment performs dynamical ranging on the optical network units to be registered, and timely and actively adjusts the pre-equalization delays of the optical network units to be registered according to different physical distances, or adjusts both the registration window and the pre-equalization delays of the optical network units to be registered, so that an optical network unit whose actual maximum physical distance value and/or actual maximum physical differential distance value exceeds a specified value in standards in the passive optical network system can also be registered at the OLT and thereby implementing normal communication.

Further, based on the method and apparatus described in the preceding embodiments, an embodiment of the present invention further provides a passive optical network system. A system architecture of the passive optical network system may be referred to FIG. 1, where the system includes an optical line terminal and a plurality of optical network units to be registered. The optical line terminal and the optical network units to be registered are connected in a point-to-multipoint mode through an optical distribution network.

The optical line terminal is configured to send pre-equalization delays that are adaptive to a preset initial registration window to the optical network units to be registered; receive information fed back by the optical network units to be registered according to the pre-equalization delays; perform ranging on the optical network units to be registered by using the information fed back by the optical network units; and adjust the pre-equalization delays according to ranging results and send adjusted pre-equalization delays to the optical network units to be registered, or adjust both the initial registration window and the pre-equalization delays according to ranging results and send adjusted pre-equalization delays to the optical network units to be registered.

The optical network units to be registered are configured to receive the pre-equalization delays provided by the optical line terminal; and feed back corresponding response information to the optical line terminal according to the pre-equalization delays.

Persons of ordinary skill in the art should understand that all or part of the steps of the foregoing method embodiments may be implemented by a program instructing relevant hardware. The program may be stored in a computer readable storage medium. When the program is executed, the steps of the foregoing method embodiments are executed. The storage medium includes any medium that may store program codes, such as a ROM, a RAM, a magnetic disk, or an optical disk.

The method and apparatus for adjusting a registration window in a passive optical network provided in the embodiments of the present invention are described in detail above. The principles and implementation modes of the present invention are described by using specific examples. The foregoing description of the embodiments is merely used to help understand the method and core ideas of the present invention; meanwhile, persons of ordinary skill in the art may make, according to the ideas of the present invention, various modifications and variations to the specific implementation modes and application scopes. In conclusion, the contents of the specification shall not be constructed as limitations to the present invention.

## Claims

1. A method for registering optical network units, ONUs, in a passive optical network, PON, at an optical terminal, OLT, comprising:
sending (A2) pre-equalization delay values to a plurality of the ONUs, wherein the pre-equalization delay values are adaptive to a preset initial registration window;
receiving (A3) information fed back by the ONUs according to the pre-equalization delay values, and performing ranging on the ONUs;
adjusting (A4) both the initial registration window and the pre-equalization delay values according to ranging results of the ONUs and sending adjusted pre-equalization delay values to the ONUs; and
receiving registration information sent by the ONUs according to the adjusted pre-equalization delay values, and interacting with the ONUs to perform registration on the ONUs.

2. The method according to claim 1, further comprising:
presetting (A1) the initial registration window that is used for the ONUs to register at an optical line terminal, OLT, wherein a size of the initial registration window meets registration requirements of a furthest ONU from the OLT.

3. The method according to claim 1, further comprising:
presetting (A1) multiple initial registration windows that are used for the ONUs to register at an OLT, wherein sizes of the initial registration windows respectively correspond to different physical distance segments from the ONUs to the OLT.

4. The method according to claim 1, wherein the step of performing ranging on the ONUs comprises:
recording a total time length of a time period from a first time instance that a pre-equalization delay value that is adaptive to the initial registration window is sent to an ONU to a second time instance that the information fed back by the ONU is received at an OLT;
subtracting the pre-equalization delay value sent to the ONU, a fixed delay of the ONU, and a maximum random delay from the total time length to obtain a remaining time value;
multiplying the remaining time value and a transmission speed of light in an optical fiber; and
taking a half of a product of the remaining time value and the transmission speed of light in the optical fiber as a distance between the ONU and the OLT.

5. The method according to any one of claims 1 to 4, wherein the step of adjusting (A4) both the initial registration window and the pre-equalization delay values according to ranging results and sending adjusted pre-equalization delays to the ONUs comprises:
if a maximum difference of physical distances from the ONUs to the OLT is greater than a maximum differential physical distance corresponding to the initial registration window, and at least one of the physical distances from the ONUs to the OLT is greater than a maximum physical distance allowed by the initial registration window, adjusting both the initial registration window and the pre-equalization delay values, and resending adjusted pre-equalization delays to the ONUs.

6. An optical line terminal, OLT, comprising:
a transceiver unit (12), configured to send pre-equalization delay values to a plurality of optical network units, ONUs, and receive information fed back by the ONUs according to the pre-equalization delay values, wherein the pre-equalization delay values are adaptive to a preset initial registration window;
a measurement unit (13); configured to perform ranging on the ONUs according to the information fed back by the ONUs;
an adjusting unit (14), configured to adjust both the initial registration window and the pre-equalization delay values according to ranging results of the measurement unit;
wherein the transceiver unit (12) is further configured to send the pre-equalization delay values adjusted by the adjusting unit to the ONUs, receive registration information sent by the ONUs according to the adjusted pre-equalization delay values, and interact with the ONUs to perform registration on the ONUs.

7. The optical line terminal according to claim 6, further comprising:
a setting unit (11), configured to preset at least one initial registration window for the ONUs to perform registration.

8. The optical line terminal according to claim 7, wherein the setting unit (11) comprises:
a first setting sub-unit (111), configured to preset an initial registration window for the ONUs to register at the OLT, wherein a size of the initial registration window meets registration requirements of a furthest ONU from the OLT.

9. The optical line terminal according to claim 7 or 8, wherein the setting unit (11) comprises:
a second setting sub-unit (112), configured to preset multiple initial registration windows for the ONUs to register at the OLT, wherein sizes of the initial registration windows respectively correspond to different physical distance segments from the ONUs to the OLT.

10. The optical line terminal according to claim 6, wherein the measurement unit (13) comprises:
a recording sub-unit (131), configured to record a total time length of a time period from a first time instance that a pre-equalization delay value that is adaptive to the initial registration window is sent to an ONU to a second time instance that the information fed back by the ONU is received at the OLT; and
a calculating sub-unit (132), configured to subtract the pre-equalization delay value sent to the ONU, a fixed delay of the ONU, and a maximum random delay from the total time length to obtain a remaining time value; multiply the remaining time value and a transmission speed of light in an optical fiber; and take a half of a product of the remaining time value and the transmission speed of light in the optical fiber as a distance from the ONU to the OLT.

11. The optical line terminal according to any one of claims 6 to 10, wherein the adjusting unit (14) comprises:
a first adjusting sub-unit (141), configured to adjust the pre-equalization delay values when a maximum difference of physical distances from the ONUs to the OLT is less than a maximum differential physical distance corresponding to the initial registration window, and at least one of the physical distances from the ONUs to the OLT is greater than a maximum physical distance allowed by the initial registration window

12. The optical line terminal according to any one of claims 6 to 10, wherein the adjusting unit comprises:
a second adjusting sub-unit (142), configured to adjust both the initial registration window set by the setting unit and the pre-equalization delay values when a maximum difference of physical distances from the ONUs to the OLT is greater than a maximum differential physical distance corresponding to the initial registration window, and at least one of the physical distances from the ONUs to the OLT is greater than a maximum physical distance allowed by the initial registration window.

13. A passive optical network system, comprising an optical line terminal, OLT, and a plurality of optical network units, ONUs, wherein the OLT and the ONUs are connected in a point-to-multipoint mode through an optical distribution network, ODN, wherein the OLT is the OLT of any one of claims 6-12.

## Patentansprüche

1. Verfahren zum Registrieren von optischen Netzwerkeinheiten, ONUs, in einem passiven optischen Netzwerk, PON, an einem optischen Leitungsabschluss, OLT, das die folgenden Schritte aufweist:
Senden (A2) von Vorentzerrungsverzögerungswerten an mehrere der ONUs, wobei die Vorentzerrungsverzögerungswerte an ein voreingestelltes Anfangsregistrierungsfenster anpassungsfähig sind;
Empfangen (A3) von Informationen, die durch die ONUs gemäß der Vorentzerrungsverzögerungswerte zurückgemeldet werden, und Durchführen einer Ortung an den ONUs;
Einstellen (A4) sowohl des Anfangsregistrierungsfensters als auch der Vorentzerrungsverzögerungswerte gemäß der Ortungsresultate der ONUs und Senden von eingestellten Vorentzerrungsverzögerungswerten an die ONUs; und
Empfangen von Registrierungsinformationen, die durch die ONUs gemäß der eingestellten Vorentzerrungsverzögerungswerte gesendet werden, und Zusammenwirken mit den ONUs, um eine Registrierung an den ONUs auszuführen.

2. Verfahren nach Anspruch 1, das ferner aufweist:
Voreinstellen (A1) des Anfangsregistrierungsfensters, das für die ONUs verwendet wird, um sie an einem optischen Leitungsabschluss, OLT, zu registrieren, wobei eine Größe des Anfangsregistrierungsfensters Registrierungsanforderungen eines am weitesten vom OLT entfernten ONU erfüllt.

3. Verfahren nach Anspruch 1, das ferner aufweist:
Voreinstellen (A1) mehrerer Anfangsregistrierungsfenster, die für die ONUs verwendet werden, um sie am OLT zu registrieren, wobei die Größen der Anfangsregistrierungsfenster jeweils unterschiedlichen physikalischen Entfernungssegmenten von den ONUs zum OLT entsprechen.

4. Verfahren nach Anspruch 1, wobei der Schritt des Durchführens einer Ortung an den ONUs aufweist:
Aufzeichnen einer Gesamtdauer einer Zeitspanne von einem ersten Zeitpunkt, zu dem ein Vorentzerrungsverzögerungswert, der an das Anfangsregistrierungsfenster anpassungsfähig ist, an eine ONU gesendet wird, zu einem zweiten Zeitpunkt, zu dem die durch die ONU zurückgemeldeten Informationen am OLT empfangen werden;
Subtrahieren des an die ONU gesendeten Vorentzerrungsverzögerungswerts, einer festen Verzögerung der ONU und einer maximalen zufälligen Verzögerung von der Gesamtdauer, um einen verbleibenden Zeitwert zu erhalten;
Multiplizieren des verbleibenden Zeitwerts und einer Übertragungsgeschwindigkeit des Lichts in einer optischen Faser; und
Übernehmen der Hälfte eines Produkts des verbleibenden Zeitwerts und der Übertragungsgeschwindigkeit des Lichts in der optischen Faser als eine Entfernung zwischen der ONU und dem OLT.

5. Verfahren nach einem der Ansprüche 1 bis 4, wobei der Schritt des Einstellens (A4) sowohl des Anfangsregistrierungsfensters als auch der Vorentzerrungsverzögerungswerte gemäß der Ortungsresultate und des Sendens von eingestellten Vorentzerrungsverzögerungen an die ONUs aufweist:
wenn eine Maximaldifferenz von physikalischen Entfernungen von den ONUs zum OLT größer als eine maximale physikalische Entfernungsdifferenz ist, die dem Anfangsregistrierungsfenster entspricht, und mindestens eine der physikalischen Entfernungen von den ONUs zum OLT größer als eine maximale physikalische Entfernung ist, die durch das Anfangsregistrierungsfenster zulässig ist, Einstellen sowohl des Anfangsregistrierungsfensters als auch der Vorentzerrungsverzögerungswerte, und erneutes Senden von eingestellten Vorentzerrungsverzögerungen für die ONUs.

6. Optischer Leitungsabschluss, OLT, der Folgendes aufweist:
eine Transceivereinheit (12), die konfiguriert ist, Vorentzerrungsverzögerungswerte an mehrere optische Netzwerkeinheiten, ONUs, zu senden und Informationen zu empfangen, die durch die ONUs gemäß der Vorentzerrungsverzögerungswerte zurückgemeldet werden, wobei die Vorentzerrungsverzögerungswerte an ein voreingestelltes Anfangsregistrierungsfenster anpassungsfähig sind;
eine Messeinheit (13), die konfiguriert ist, eine Ortung an den ONUs gemäß der durch die ONUs zurückgemeldeten Informationen durchzuführen;
eine Einstelleinheit (14), die konfiguriert ist, sowohl das Anfangsregistrierungsfenster als auch die Vorentzerrungsverzögerungswerte gemäß der Ortungsresultate der Messeinheit einzustellen;
wobei die Transceivereinheit (12) ferner konfiguriert ist, die durch die Einstelleinheit eingestellten Vorentzerrungsverzögerungswerte an die ONUs zu senden, durch die ONUs gemäß der eingestellten Vorentzerrungsverzögerungswerte gesendeten Registrierungsinformationen zu empfangen, und mit den ONUs zusammenzuwirken, um die Registrierung an den ONUs durchzuführen.

7. Optischer Leitungsabschluss nach Anspruch 6, der ferner aufweist:
eine Festlegungseinheit (11), die konfiguriert ist, mindestens ein Anfangsregistrierungsfenster für die ONUs voreinzustellen, um die Registrierung durchzuführen.

8. Optischer Leitungsabschluss nach Anspruch 7, wobei die Festlegungseinheit (11) aufweist:
eine erste Festlegungsteileinheit (111), die konfiguriert ist, ein Anfangsregistrierungsfenster für die ONUs voreinzustellen, um sie am OLT zu registrieren, wobei eine Größe des Anfangsregistrierungsfensters Registrierungsanforderungen eines am weitesten vom OLT entfernten ONU erfüllt.

9. Optischer Leitungsabschluss nach Anspruch 7 oder 8, wobei die Festlegungseinheit (11) aufweist:
eine zweite Festlegungsteileinheit (112), die konfiguriert ist, mehrere Anfangsregistrierungsfenster für die ONUs voreinzustellen, um sie am OLT zu registrieren, wobei die Größen der Anfangsregistrierungsfenster jeweils unterschiedlichen physikalischen Entfernungssegmenten von den ONUs zum OLT entsprechen.

10. Optischer Leitungsabschluss nach Anspruch 6, wobei die Messeinheit (13) aufweist:
eine Aufzeichnungsteileinheit (131), die konfiguriert ist, eine Gesamtdauer einer Zeitspanne von einem ersten Zeitpunkt, zu dem ein Vorentzerrungsverzögerungswert, der an das Anfangsregistrierungsfenster anpassungsfähig ist, an eine ONU gesendet wird, zu einem zweiten Zeitpunkt aufzuzeichnen, zu dem durch die ONU zurückgemeldete Informationen am OLT empfangen werden; und
eine Berechnungsteileinheit (132), die konfiguriert ist, die an die ONU gesendeten Vorentzerrungsverzögerungswerte, eine feste Verzögerung der ONU und eine maximale zufällige Verzögerung von der Gesamtdauer zu subtrahieren, um einen verbleibenden Zeitwert zu erhalten; den verbleibenden Zeitwert und eine Übertragungsgeschwindigkeit des Lichts in einer optischen Faser zu multiplizieren; und die Hälfte eines Produkts des verbleibenden Zeitwerts und der Übertragungsgeschwindigkeit des Lichts in der optischen Faser als eine Entfernung vom ONU zum OLT zu übernehmen.

11. Optischer Leitungsabschluss nach einem der Ansprüche 6 bis 10, wobei die Einstelleinheit (14) aufweist:
eine erste Einstellteileinheit (141), die konfiguriert ist, die Vorentzerrungsverzögerungswerte einzustellen, wenn eine Maximaldifferenz von physikalischen Entfernungen von den ONUs zum OLT kleiner als eine maximale physikalische Entfernungsdifferenz ist, die dem Anfangsregistrierungsfenster entspricht, und mindestens eine der physikalischen Entfernungen von den ONUs zum OLT größer als eine maximale physikalische Entfernung ist, die durch das Anfangsregistrierungsfenster zulässig ist.

12. Optischer Leitungsabschluss nach einem der Ansprüche 6 bis 10, wobei die Einstelleinheit aufweist:
eine zweite Einstellteileinheit (142), die konfiguriert ist, sowohl das durch die Festlegungseinheit festgelegte Anfangsregistrierungsfenster als auch die Vorentzerrungsverzögerungswerte einzustellen, wenn eine Maximaldifferenz von physikalischen Entfernungen von den ONUs zum OLT größer als eine maximale physikalische Entfernungsdifferenz ist, die dem Anfangsregistrierungsfenster entspricht, und mindestens eine der physikalischen Entfernungen von den ONUs zum OLT größer als eine maximale physikalische Entfernung ist, die durch das Anfangsregistrierungsfenster zulässig ist.

13. Passives optisches Netzwerksystem, das einen optischen Leitungsabschluss, OLT, und mehrere optische Netzwerkeinheiten, ONUs, aufweist, wobei der OLT und die ONUs in einer Punkt-zu-Mehrpunkt-Art durch ein optisches Verteilungsnetzwerk, ODN verbunden sind, wobei der OLT der OLT nach einem der Ansprüche 6 bis 12 ist.

## Revendications

1. Procédé d'enregistrement d'unités de réseau optique, ONU (Optical Network Unit), dans un réseau optique passif, PON (Passive Optical Network), au niveau d'un terminal optique, OLT (Optical Line Terminal), comprenant :
l'envoi (A2) de valeurs de retards de pré-égalisation à une pluralité des ONU, dans lequel les valeurs de retards de pré-égalisation sont adaptatives par rapport à une fenêtre d'enregistrement initiale prédéfinie ;
la réception (A3) d'informations renvoyées par les ONU conformément aux valeurs de retards de pré-égalisation, et l'exécution d'une mesure de distance sur les ONU ;
l'ajustement (A4) à la fois de la fenêtre d'enregistrement initiale et des valeurs de retards de pré-égalisation conformément à des résultats de mesure de distance des ONU et l'envoi de valeurs de retards de pré-égalisation ajustées aux ONU ; et
la réception d'informations d'enregistrement envoyées par les ONU conformément aux valeurs de retards de pré-égalisation ajustées, et l'interaction avec les ONU pour effectuer un enregistrement sur les ONU.

2. Procédé selon la revendication 1, comprenant en outre :
le préréglage (A1) de la fenêtre d'enregistrement initiale qui est utilisée pour que les ONU s'enregistrent au niveau d'un terminal de ligne optique, OLT, dans lequel une taille de la fenêtre d'enregistrement initiale répond à des exigences d'enregistrement d'une ONU la plus éloignée de l'OLT.

3. Procédé selon la revendication 1, comprenant en outre :
le préréglage (A1) de multiples fenêtres d'enregistrement initiales qui sont utilisées pour que les ONU s'enregistrent au niveau d'un OLT, dans lequel des tailles des fenêtres d'enregistrement initiales correspondent respectivement à des segments de distance physique différents des ONU à l'OLT.

4. Procédé selon la revendication 1, dans lequel l'étape d'exécution d'une mesure de distance sur les ONU comprend :
l'enregistrement d'une longueur temporelle totale d'une période de temps allant d'un premier instant auquel une valeur de retard de pré-égalisation qui est adaptative par rapport à la fenêtre d'enregistrement initiale est envoyée à une ONU, à un second instant auquel les informations renvoyées par l'ONU sont reçues au niveau d'un OLT;
la soustraction de la valeur de retard de pré-égalisation envoyée à l'ONU, d'un retard fixe de l'ONU, et d'un retard aléatoire maximum, à la longueur temporelle totale afin d'obtenir une valeur de temps restant ;
la multiplication de la valeur de temps restant par une vitesse de transmission de la lumière dans une fibre optique ; et
le calcul de la moitié d'un produit de la valeur de temps restant par la vitesse de transmission de la lumière dans la fibre optique en tant que distance entre l'ONU et l'OLT.

5. Procédé selon l'une quelconque des revendications 1 à 4, dans lequel l'étape d'ajustement (A4) à la fois de la fenêtre d'enregistrement initiale et des valeurs de retards de pré-égalisation conformément à des résultats de mesure de distance et d'envoi de retards de pré-égalisation ajustés aux ONU comprend :
si une différence maximale de distances physiques des ONU à l'OLT est supérieure à une distance physique différentielle maximale correspondant à la fenêtre d'enregistrement initiale, et si au moins l'une des distances physiques des ONU à l'OLT est supérieure à une distance physique maximale autorisée par la fenêtre d'enregistrement initiale, l'ajustement à la fois de la fenêtre d'enregistrement initiale et des valeurs de retards de pré-égalisation, et le renvoi de retards de pré-égalisation ajustés aux ONU.

6. Terminal de ligne optique, OLT, comprenant :
une unité d'émission-réception (12), configurée pour envoyer des valeurs de retards de pré-égalisation à une pluralité d'unités de réseau optique, ONU, et recevoir des informations renvoyées par les ONU conformément aux valeurs de retards de pré-égalisation, dans lequel les valeurs de retards de pré-égalisation sont adaptatives par rapport à une fenêtre d'enregistrement initiale prédéfinie ;
une unité de mesure (13), configurée pour effectuer des mesures de distance sur les ONU conformément aux informations renvoyées par les ONU ;
une unité d'ajustement (14), configurée pour ajuster à la fois la fenêtre d'enregistrement initiale et les valeurs de retards de pré-égalisation conformément à des résultats de mesure de distance de l'unité de mesure ;
dans lequel l'unité d'émission-réception (12) est en outre configurée pour envoyer les valeurs de retards de pré-égalisation ajustées par l'unité d'ajustement aux ONU,
recevoir des informations d'enregistrement envoyées par les ONU conformément aux valeurs de retards de pré-égalisation ajustées, et interagir avec les ONU pour effectuer un enregistrement sur les ONU.

7. Terminal de ligne optique selon la revendication 6, comprenant en outre :
une unité de réglage (11), configurée pour prérégler au moins une fenêtre d'enregistrement initiale permettant aux ONU d'effectuer un enregistrement.

8. Terminal de ligne optique selon la revendication 7, dans lequel l'unité de réglage (11) comprend :
une première sous-unité de réglage (111), configurée pour prérégler une fenêtre d'enregistrement initiale pour que les ONU s'enregistrent au niveau de l'OLT, dans lequel une taille de la fenêtre d'enregistrement initiale répond à des exigences d'enregistrement d'une ONU la plus éloignée de l'OLT.

9. Terminal de ligne optique selon la revendication 7 ou 8, dans lequel l'unité de réglage (11) comprend :
une seconde sous-unité de réglage (112), configurée pour prérégler de multiples fenêtres d'enregistrement initiales pour que les ONU s'enregistrent au niveau de l'OLT, dans lequel des tailles des fenêtres d'enregistrement initiales correspondent respectivement à des segments de distance physique différents des ONU à l'OLT.

10. Terminal de ligne optique selon la revendication 6, dans lequel l'unité de mesure (13) comprend :
une sous-unité d'enregistrement (131), configurée pour enregistrer une longueur temporelle totale d'une période de temps allant d'un premier instant auquel une valeur de retard de pré-égalisation qui est adaptative par rapport à la fenêtre d'enregistrement initiale est envoyée à une ONU, à un second instant auquel les informations renvoyées par l'ONU sont reçues au niveau de l'OLT ; et
une sous-unité de calcul (132), configurée pour soustraire la valeur de retard de pré-égalisation envoyée à l'ONU, un retard fixe de l'ONU, et un retard aléatoire maximum, à la longueur temporelle totale afin d'obtenir une valeur de temps restant ;
multiplier la valeur de temps restant par une vitesse de transmission de la lumière dans une fibre optique ; et calculer la moitié d'un produit de la valeur de temps restant par la vitesse de transmission de la lumière dans la fibre optique en tant que distance de l'ONU à l'OLT.

11. Terminal de ligne optique selon l'une quelconque des revendications 6 à 10, dans lequel l'unité d'ajustement (14) comprend :
une première sous-unité d'ajustement (141), configurée pour ajuster les valeurs de retards de pré-égalisation lorsqu'une différence maximale de distances physiques des ONU à l'OLT est inférieure à une distance physique différentielle maximale correspondant à la fenêtre d'enregistrement initiale, et au moins l'une des distances physiques des ONU à l'OLT est supérieure à une distance physique maximale autorisée par la fenêtre d'enregistrement initiale.

12. Terminal de ligne optique selon l'une quelconque des revendications 6 à 10, dans lequel l'unité d'ajustement comprend :
une seconde sous-unité d'ajustement (142), configurée pour ajuster à la fois la fenêtre d'enregistrement initiale réglée par l'unité de réglage et les valeurs de retards de pré-égalisation lorsqu'une différence maximale entre les distances physiques des ONU à l'OLT est supérieure à une distance physique différentielle maximale correspondant à la fenêtre d'enregistrement initiale, et lorsqu'au moins l'une des distances physiques des ONU à l'OLT est supérieure à une distance physique maximale autorisée par la fenêtre d'enregistrement initiale.

13. Système de réseau optique passif, comprenant un terminal de ligne optique, OLT, et une pluralité d'unités de réseau optique, ONU, dans lequel l'OLT et les ONU sont connectés en mode point à multipoint par l'intermédiaire d'un réseau de distribution optique, ODN (Optical Distribution Network), dans lequel l'OLT est l'OLT selon l'une quelconque des revendications 6 à 12.
